**Europäisches Patentamt**

**European Patent Office**

**Office européen des brevets**

(19)

(11) Veröffentlichungsnummer: **0 223 166**
**B1**

# (12) EUROPÄISCHE PATENTSCHRIFT

(45) Veröffentlichungstag der Patentschrift:
**17.05.89**

(21) Anmeldenummer: **86115489.6**

(22) Anmeldetag: **07.11.86**

(51) Int. Cl.⁴: **B65B 25/04**, B65B 31/00,
A23B 7/148

(54) Verfahren zum Haltbarmachen von Speisefrüchten und Pflanzen.

(30) Priorität: **12.11.85  DE 3540033**

(43) Veröffentlichungstag der Anmeldung:
**27.05.87 Patentblatt 87/22**

(45) Bekanntmachung des Hinweises auf die Patenterteilung:
**17.05.89 Patentblatt 89/20**

(84) Benannte Vertragsstaaten:
**AT BE CH ES FR GB GR IT LI NL SE**

(56) Entgegenhaltungen:
**DE-A- 2 010 257**
**DE-U- 8 433 201**
**NL-A- 290 206**

(73) Patentinhaber: **Tallafus, Ottmar, Am Himmelreich 14,**
**D-6967 Buchen 1(DE)**

(72) Erfinder: **Tallafus, Ottmar, Am Himmelreich 14,**
**D-6967 Buchen 1(DE)**

(74) Vertreter: **Trappenberg, Hans, Postfach 1909,**
**D-7500 Karlsruhe 1(DE)**

## Beschreibung

Die Erfindung betrifft ein Verfahren zum Haltbarmachen von speisefertig zubereiteten und verkaufsfertig abgepackten Früchten und Pflanzen, insbesondere von Geophyten und Pilzen, durch Einsatz von in die Abpackbeutel eingeleiteten Gasen. Ein derartiges Verfahren ist z.B. bekannt aus DE-U 8 433 201.

Die Konservierung von Lebensmitteln durch konservierende Gase wird schon über einen längeren Zeitraum angewendet, gewann jedoch stürmisch an Bedeutung, als in immer steigendem Maße speisefertig zubereitete und verkaufsfertig abgepackte Lebensmittel verlangt wurden. Zu diesen Lebensmitteln gehören sowohl alle Arten von Fleisch beziehungsweise Fleischzubereitungen, von Fisch, Käse, Teigwaren und Gemüsen, wie auch verschiedenste Mischungen dieser Lebensmittel. Zur Konservierung, zumindest zu einer Halbkonserve, die über einen Zeitraum von einigen Tagen haltbar zu machen ist, wurden insbesondere Mischgase eingesezt, mit Vorteil Kohlendioxid und Stickstoff. Insbesondere um das Aussehen der Lebensmittel nicht zu verändern beziehungsweise das frische Aussehen beizubehalten, wird in manchen Fällen, insbesondere bei Frischfleisch, zur Nachrötung des Myoglobins, dem in die Abpackbeutel eingeleiteten Gas beziehungsweise Gasgemisch auch noch Sauerstoff hinzugefügt. Diese Sauerstoffzugabe verkürzt allerdings, trotz Kühlung, die Haltbarkeitszeit.

Die Aufgabe beim Haltbarmachen beziehungsweise Konservieren von Lebensmitteln besteht darin, die im oder am Lebensmittel befindlichen Mikroorganismen abzutöten oder zumindest im Wachstum zu hemmen. Daneben sind dann auch noch Veränderungserscheinungen enzymatischer oder physikalischer/chemischer Natur zu unterbinden. Durch die Konservierung soll das Lebensmittel sowohl in seiner Konsistenz wie auch in seinem Aussehen möglichst wenig verändert werden und es soll auch seine Nähr- und Aromastoffe weitgehend bewahren.

Hinsichtlich der Abtötung oder zumindest der Wachstumshemmung von Mikroorganismen sind insbesondere die aeroben Bakterien zu bekämpfen, also die Bakterien, die zum Leben Sauerstoff benötigen. Die Bestrebungen gehen daher dahin, diese Bakterien dadurch zu bekämpfen, daß ihnen der zum Leben notwendige Sauerstoff genommen beziehungsweise der in der Luft vorhandene Luftsauerstoff durch Gasmischungen ersetzt wird, die für diese Bakterien den notwendigen Gasaustausch nicht zulassen. Dies gelingt auf jeden Fall mit reinem Stickstoff, wobei allerdings dafür Sorge zu tragen ist, daß sich in den Abpackbeuteln auch tatsächlich nur Stickstoffgas befindet. Jedoch auch Kohlenstoff/Sauerstoff-Verbindungen, hier insbesondere das Kohlendioxid ($CO_2$), erfüllen diese Bedingungen, wie selbstverständlich auch Mischungen von Kohlendioxid mit Stickstoff. Kohlenmonoxid ist im Prinzip auch geeignet, das Bakterienwachstum zu hemmen, jedoch kann es nur in geringen Mengen eingesetzt werden, da es auch für den Menschen nicht unbedenklich ist. Diesen Gasen beziehungsweise Gasgemischen kann nun auch noch, je nach haltbarzumachendem Gut und je nach der Zeit, über die das Gut haltbar zu machen ist, ein mehr oder weniger großer Raumanteil Sauerstoff hinzugefügt beziehungsweise belassen werden. Dieser Sauerstoffanteil kann bei gekühltem Frischfleisch bis zu 70 % gehen, bei etwa 20 % Kohlendioxid und 10 % Stickstoff. Selbstverständlich sind hier auch andere Mischungsverhältnisse möglich, jedoch wird die oben angegebene Sauerstoffmenge von ca. 70 % Raumanteil in aller Regel, selbst bei nur kurzzeitig haltbarzumachenden Lebensmitteln, nicht überschritten; bakteriologischen Schutz bieten hierbei nur die Schutzgase Stickstoff ($N_2$), Kohlendioxid ($CO_2$) und Kohlenmonoxid ($CO$).

Zusätzlich zum Einfüllen dieser Gase kann das haltbarzumachende Gut zuvor auch noch gekühlt beziehungsweise tiefgekühlt werden. Die Tiefkühlung mit einer Temperatur deutlich unter 0 °C eignet sich allerdings nicht für jedes Lebensmittel; pflanzliche Lebensmittel dürfen in aller Regel nicht unter 0 °C abgekühlt werden. Eine Ausnahme bilden Gemüsesorten, die vor dem Verzehr gekocht werden.

Zur Zubereitung von Salaten können im allgemeinen nur frische Lebensmittel, verschiedene Salatsorten - Escarol, Radicchio, Weißkohl, Romana, Wiesenkräuter - Zuckermais, Radieschen, Sellerieknollen, Möhren, Kartoffeln, Zwiebeln etc. verwendet werden. In neuerer Zeit werden jedoch auch diese Salat beziehungsweise Salatmischungen vermehrt speisefertig abgepackt angeboten. Auch hier werden die Salate beziehungsweise Salatmischungen unter Schutzgas verpackt, im allgemeinen, da es sich hier um sehr verderbliche Lebensmittel handelt, unter Stickstoff oder Stickstoff-Kohlendioxid-Gemischen. Gleiches gilt für Pilze, die in neuerer Zeit auch in immer stärkerem Maße auf den Markt kommen. Trotz der Kühlung, die zusätzlich zu dem Verpacken unter Schutzgas bei diesen emfindlichen Lebensmitteln noch angewendet wird, ist jedoch im allgemeinen eine Qualitätseinbuße hinsichtlich Farbe und Geschmack nach einer verhältnismäßig kurzen Lagerzeit von einigen Tagen kaum zu vermeiden.

Die Erfindung hat sich die Aufgabe gestellt, diese bereits nach kurzer Zeit erfolgende Qualitätseinbuße zu verhindern, was in erfindungsgemäßer Weise überraschend durch das kennzeichnende Merkmal des Patentanspruchs 1 gelingt.

Obwohl bekannt ist, daß gerade die aeroben Bakterien für den Verderb dieser empfindlichen Lebensmittel maßgebend sind und daher bisher immer darauf hingearbeitet wurde, diesen aeroben Bakterien die Lebensmöglichkeit durch den Entzug von Sauerstoff zu nehmen, hat sich gezeigt, daß sich mit dem Einfüllen von reinem Sauerstoff in die Abpackungen tatsächlich ein hervorragender Schutzgaseffekt einstellt, der über denjenigen der bekannten Schutzgasmischungen deutlich hinausgeht, der also das Wachstum auch dieser aeroben Bakterien hemmt und zudem die oben angeführten Qualitätseinbußen verhindert. Wie es zu diesem Effekt kommt, ist noch weitgehend ungeklärt. Es mag sein, daß selbst diese aeroben Bakterien unter reinem Sauerstoff nicht optimale Lebensbedingungen vorfinden, daß also dieser reine Sauerstoff toxisch auf sie wirkt oder auch, daß den mit reinem Sauerstoff ($O_2$) behandelten Pflanzen nach der Ernte beziehungsweise Waschen und Schneiden durch eine Sauerstoff-($O_2$)-Hyperventilation noch soviel Kohlenstoff/Sauerstoff-Verbindungen entstehen, daß sich zusammen mit dem eingefüllten Sauerstoff eine optimale Schutzgasatmosphäre bildet. Ein bakterienhemmender Oberflächenfilm kann auch dadurch entstehen, daß das im vorhandenen Wasser gelöste Kohlendioxid ($CO_2$) einen Säureschutzfilm ergibt.

Neben der Verhinderung der oben angeführten Qualitätsminderung, also der Minderung durch Veränderung der Farbe und des Geschmacks, zeigt sich auch zusätzlich, daß sich diese Abpackungen, also die Beutel, die hauptsächlich aus Polyethylen bestehen, in denen die Lebensmittel enthalten sind, nicht mehr aufwölben, sondern daß im Gegenteil eine Volumenverminderung während der Lagerzeit stattfindet. Beides zusammen ergibt ein Produkt, das durch sein frisches Aussehen und die anliegende, nicht aufgebauchte Packung, gerne gekauft wird, zudem festgestellt werden konnte, daß der Geschmack der verpackten Lebensmittel auf keinen Fall gelitten hat beziehungsweise von frischen derartigen Lebensmitteln praktisch nicht zu unterscheiden ist.

Als derartige Lebensmittel kommen, wie angeführt, insbesondere Geophyten in Frage, als Früchte, die wie Zwiebeln, Kartoffel, Möhren, Sellerieknollen, Rettiche etc. in der Erde wachsen, aber auch Speisepilze und Kraut etc.

Um einem Verderb dieser empfindlichen Lebensmittel vorzubeugen, müssen sie selbstverständlich kühl gehalten und kühl verpackt werden. Auch die Sauerstoffeinleitung in die Abpackbeutel sollte nur erfolgen, wenn das abzupackende Gut auf eine Temperatur von 1 °C bis 5 °C abgekühlt ist. Bei diesem gekühlt abgepackten Gut empfiehlt sich eine Lagertemperatur von 1 °C bis 8 °C.

Gleichzeitig mit dem Einleiten des Sauerstoffs kann das Gut auch dadurch gekühlt werden, daß der Sauerstoff mit Minus-Temperatur in den Abpackbeutel eingeleitet wird. Die Temperaturen können hierbei so niedrig liegen, daß der Sauerstoff neben der erfindungsgemäßen Gasatmosphäre gleichzeitig bei zum Schockfrosten geeigneten Früchten und Gemüse sorten zum Erzeugen der Schockfrostkälte dienen kann.

Die Durchführung des Verfahrens soll an Verpackungsbeispielen erläutert werden:

Beispiel 1:

In einem Abpackbeutel sind 250 g einer Gemüse-Eintopfmischung abgepackt, bestehend aus 40 g Kohlrabi, 60 g Sellerieknollen, 40 g Lauch, 30 g Wirsing, 10 g Petersilie, 40 g gestifteten Kartoffeln, 10 g Erbsen, 20 g Grüne Bohnen, alles bewürfelt geschnitten.

Im Abpackbeutel befindet sich reiner Sauerstoff. Das Aussehen dieser Mischung hat sich innerhalb einer Lagerzeit von 3 bis 4 Tagen ohne Kühlung praktisch nicht verändert. Die Lebensmittel sehen nach dieser Zeit noch vollkommen frisch aus. Auch der Geschmack dieser Mischung ist nach dieser Zeit von frischen Lebensmitteln praktisch nicht zu unterscheiden.

Beispiel 2:

Die gleiche Mischung wie oben wurde mit tiefkaltem Sauerstoff gekühlt verpackt und bei einer, etwa zwischen 3 °C und 5 °C liegenden Temperatur über einen Zeitraum von zwei bis drei Wochen aufbewahrt. Nach dieser Zeit trat keine Veränderung der Mischung im Aussehen, wie auch im Geschmack auf.

Beispiel 3:

Das erfindungsgemäße Verfahren ist auch für eine Salatmischung, die Geophyten enthält, anwendbar. In einem 250 g-Beutel ist eingefüllt: 10 g Karotten gestiftet, 80 g Weißkraut langfasrig geschnitten, 80 g Escarol (Endivien), 20 g Radicchio, 20 g Eisbergsalat, 5 g Zuckermais, 5 g Radieschen und 30 g Romana.

Auch hier befindet sich wieder im Abpackbeutel reiner Sauerstoff. Es kann auch wiederum nach einer Lagerzeit von 3 bis 4 Tagen ohne Kühlung praktisch keine Veränderung dieser Mischung festgestellt werden. Der Salat sieht nach dieser Zeit noch vollkommen frisch aus. Auch der Geschmack des Gutes ist nach dieser Zeit von frisch angemachtem Salat praktisch nicht zu unterscheiden.

Beispiel 4:

Die gleiche Salatmischung wie bei Beispiel 3 wurde unter Verwendung von tiefkaltem Sauerstoff gekühlt verpackt und bei einer Temperatur von etwa 3 °C bis 5 °C ebenfalls über einen Zeitraum von zwei bis drei Wochen aufbewahrt. Auch hier war wiederum, wie bei dem Beispiel 2, nach dieser verhältnismäßig langen Aufbewahrungszeit keine Veränderung der Salatmischung im Aussehen, wie auch im Geschmack, festzustellen.

**Patentansprüche**

1. Verfahren zum Haltbarmachen von speisefertig zubereiteten und verkaufsfertig abzupackenden Früchten und Pflanzen, insbesondere von Geophyten und Pilzen, durch Einsatz von in die Abpackbeutel eingeleiteten Gasen, dadurch gekennzeichnet, daß in die Abpackbeutel reiner Sauerstoff ($O_2$) eingeleitet wird, so daß sich das abgepackte Gut in einer Sauerstoff-Schutzgasatmosphäre befindet.

2. Verfahren nach Anspruch 1, dadurch gekennzeichnet, daß das abzupackende Gut auf eine Temperatur von 1 °C bis 5 °C abgekühlt ist.

3. Verfahren nach Anspruch 1 oder 2, dadurch gekennzeichnet, daß der Sauerstoff beim Einleiten in den Abpackbeutel eine Minus-Temperatur aufweist.

4. Verfahren nach einem oder mehreren der vorhergehenden Ansprüche,
dadurch gekennzeichnet,
daß das so verpackte Gut bei einer Umgebungstemperatur von 1 °C bis 8 °C gelagert wird.

5. Verfahren nach Anspruch 3,
dadurch gekennzeichnet,
daß der Sauerstoff bei zum Schockfrosten geeigneten Früchten und Gemüsesorten zum Erzeugen der Schockfrostkälte und der Gasatmosphäre eingesetzt wird.

## Claims

1. A process for preserving fruit and vegetables which are prepared ready to eat and which are to be packed ready to sell, in particular geophytes and mushrooms, by using gases which are introduced into the packing bags, characterised in that pure oxygen ($O_2$) is introduced into the packing bags so that the packed material is in an oxygen protective gas atmosphere.

2. A process according to claim 1 characterised in that the material to be packed is refrigerated to a temperature of from 1°C to 5°C.

3. A process according to claim 1 or claim 2 characterised in that the oxygen is at a minus temperature when it is introduced into the bag.

4. A process according to one or more of the preceding claims characterised in that the material which is packed in that way is stored at an ambient temperature of from 1°C to 8°C.

5. A process according to claim 3 characterised in that the oxygen is used for producing a shock freezing effect and the gas atmosphere when dealing with fruit and vegetables which are suitable for shock freezing.

## Revendications

1. Procédé de conservation de fruits et de plantes, en particulier de géophytes et de champignons prêts à consommer et devant être emballés en conditionnement de vente, par utilisation de gaz introduits dans les sachets d'emballage, caractérisé par le fait
que de l'oxygène pur ($O_2$) est introduit dans les sachets d'emballage, de telle sorte que le produit emballé se trouve dans une atmosphère d'oxygène agissant comme un gaz protecteur.

2. Procédé selon la revendication 1, caractérisé par le fait que le produit devant être emballé est refroidi jusqu'à une température de 1°C à 5°C.

3. Procédé selon la revendication 1 ou 2, caractérisé par le fait
que l'oxygène présente une température négative lors de l'introduction dans le sachet d'emballage.

4. Procédé selon l'une ou plusieurs des revendications précédentes, caractérisé par le fait
que le produit ainsi emballé est stocké à une température ambiante de 1°C à 8°C.

5. Procédé selon la revendication 3, caractérisé par le fait
que, en présence de fruits et de variétés de légumes se prêtant à la congélation ultrarapide, l'oxygène est utilisé pour engendrer le froid de congélation ultrarapide et l'atmosphère gazeuse.